# EUROPEAN PATENT APPLICATION

(11) **EP 3 637 088 A1**
(43) Date of publication of application: **15.04.2020**
(21) Application number: 18199740.4
(22) Date of filing: 10.10.2018
(51) Int. Cl.: G01N 21/17, G01N 29/24

(54) **PHOTOACOUSTIC DETECTOR**

(71) Applicant: Ostbayerische Technische Hochschule Regensburg, 93049 Regensburg (DE)
(72) Inventor: Rück, Thomas, 93059 Regensburg (DE); Bierl, Rudolf, 93055 Regensburg (DE)
(74) Representative: Koplin, Moritz

(57) **Abstract**

Provided is a photoacoustic detector. The detector (10) comprises an emitter (14), an acoustic resonator (16), and an acoustic sensor (18). The emitter (14) is arranged adjacent to a transparent wall (20) of the acoustic resonator (16) and is configured to emit modulated electromagnetic radiation (22) that enters the acoustic resonator (16) through the transparent wall (20) in a direction that intersects with a direction of propagation of an acoustic wave (24) caused by the modulated electromagnetic radiation (22).

## Description

### FIELD

The present disclosure relates to photoacoustic detectors. In particular, the present invention relates to photoacoustic detectors for detecting the presence/absence and/or the concentration of one or more species in a (liquid or gaseous) fluid.

### BACKGROUND

Photoacoustic detectors exploit thermal expansion caused by pulsed electromagnetic radiation and may be employed for analyzing the composition of matter, as the (degree of) absorption of electromagnetic radiation of a given frequency usually differs for different species.

### SUMMARY

The present invention provides a photoacoustic detector comprising an emitter, an acoustic resonator, and an acoustic sensor. The emitter is arranged adjacent to a transparent wall of the acoustic resonator and is configured to emit modulated electromagnetic radiation that enters the acoustic resonator through the transparent wall in a direction that intersects with a direction of propagation of an acoustic wave caused by the modulated electromagnetic radiation.

Notably, the term "modulated electromagnetic radiation", as used throughout the description and the claims, particularly refers to amplitude-modulated or frequency-modulated electromagnetic waves (or both). In this regard, the term "emitter", as used throughout the description and the claims, does not only encompass a single device that emits modulated electromagnetic radiation, but may also refer to a system of two devices where one device emits electromagnetic radiation and the other device modulates (the amplitude or the frequency of) the emitted electromagnetic waves.

In addition, the formulation "adjacent to a transparent wall", as used throughout the description and the claims, particularly refers to a scenario in which a surface of the emitter is in (direct) mechanical contact with a surface of the transparent wall, but also covers designs/builds where there is a small gap (e.g., a small space which is free of optical components) between the emitter and the wall.

Furthermore, the term "resonator", as used throughout the description and the claims, particularly refers to a device which ensures that pressure waves of a specific wavelength (i.e., a wavelength corresponding to a resonance frequency of the resonator) have a comparatively higher amplitude than pressure waves of neighboring wavelengths (i.e., that the resonance spectrum has a peak at the resonance frequency), if the power that excites the pressure waves is equally distributed over the different wavelengths.

Moreover, the term "acoustic sensor", as used throughout the description and the claims, particularly refers to a device which is sensitive to pressure variations. The acoustic sensor may be tuned to the resonance frequency to increase the detector sensitivity. For example, the acoustic sensor may be a micro electro-mechanical system (MEMS) that has a resonance frequency which matches a resonance frequency of the resonator (cavity).

In addition, the formulation "modulated electromagnetic radiation that enters the resonator", as used throughout the description and the claims, particularly refers to modulated electromagnetic radiation which enters (and is at least partially absorbed by matter within) a cavity formed by one or more walls of the resonator.

Furthermore, the formulation "a direction that intersects with a direction of propagation of an acoustic wave caused by the modulated electromagnetic radiation", as used throughout the description and the claims, particularly refers to a direction that is not parallel (e.g., perpendicular) to a (longitudinal) axis of the cavity (e.g., the circular symmetry axis of a cylindrical cavity), wherein the dimension of the cavity L along said axis matches (e.g., is equal to half of, one time, one and a half times, two times, etc.) the specific wavelength of the standing acoustic wave inside the resonator.

Yet further, the term "transparent wall", as used throughout the description and the claims, particularly refers to a wall that is transparent to the electromagnetic radiation required for detecting a specific species (i.e. electromagnetic radiation having a spectrum including a frequency at which the to-be-detected species has a relative maximum of electromagnetic energy absorption). In other words, the transparent wall does not have to be transparent to electromagnetic radiation of a wide frequency range, but it may suffice that said wall is transparent to electromagnetic radiation within a relatively narrow frequency-band around a frequency at which the spectrum of the electromagnetic energy absorbed by the to-be-detected species has a peak.

A modulation frequency of the modulated electromagnetic radiation may be at 1 kHz or above.

This allows reducing the cavity size and hence enables a more compact design. For example, the detector may be fabricated based on micro systems technology (MST) and delivered as a MEMS on a chip. In addition, higher modulation frequencies allow for higher selectivity when measuring.

The distance between the emitter and the transparent wall may be below λ/2 with λ being a zeroth-order resonance wavelength of the acoustic resonator. For example, the emitter may be in contact with the transparent wall of the acoustic resonator. For instance, the emitter may comprise a semiconductor-chip with a surface that adheres to a surface of the transparent wall.

This allows further reducing the detector size, which decreases the detector weight and the required installation space and hence increases the number of employment options.

The acoustic sensor may be attached to the acoustic resonator. The acoustic sensor may comprise a tuning fork or a cantilever or a membrane that is in contact with a fluid in the acoustic resonator. The tuning fork, cantilever, or the membrane may comprise silicon (e.g., SiO₂, Si₃N₄, etc.).

For instance, the acoustic sensor may comprise a silicon chip with an (etched out) cantilever and the cantilever may cover an opening of the cavity such that pressure variations within the cavity excite vibrations/oscillations of the cantilever.

The direction of propagation of the acoustic wave may be parallel to an axis of the cavity of the acoustic resonator. The acoustic resonator and the emitter may be stacked in a first radial direction, and the acoustic resonator and the acoustic sensor may be stacked in a second radial direction. The first radial direction and the second radial direction may be anti-parallel or form an angle of 90°.

The emitter may be an edge emitter.

For instance, the emitter and the resonator may be placed side by side on a common substrate.

The emitter may be a light emitting diode, LED, or a laser diode, LD.

The photoacoustic detector may further comprise an electronic circuit which is configured to filter out or compensate a background signal caused by modulated electromagnetic radiation incident on the acoustic sensor.

For example, the electronic circuit may be configured to carry-out a modulation cancelation method (MOCAM).

The acoustic resonator may comprise a glass.

For example, the resonator cavity may be etched into a glass substrate (chip).

The direction of propagation of the acoustic wave and the direction that intersects with the direction of propagation of the acoustic wave may form an angle in a range of 15° to 165°.

### BRIEF DESCRIPTION OF THE DRAWINGS

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1 schematically illustrates the design of a detector in accordance with the present invention;
Fig. 1a schematically illustrates the spectrum of the electromagnetic radiation and the absorption of said electromagnetic radiation by the to-be-detected species and other species within the detector;
Fig. 1b and Fig. ic schematically illustrate the interdependence between the dimensions of the cavity of the resonator and the modulation frequency;
Fig. 2 to Fig 4 schematically illustrate modifications of the detector of Fig. 1; and
Fig. 5 shows a flow chart of a process of manufacturing a batch of detectors in accordance with Fig. 1 to Fig. 4.
Notably, the drawings are not drawn to scale and unless otherwise indicated, they are merely intended to conceptually illustrate the structures and procedures described herein.

### DETAILED DESCRIPTION

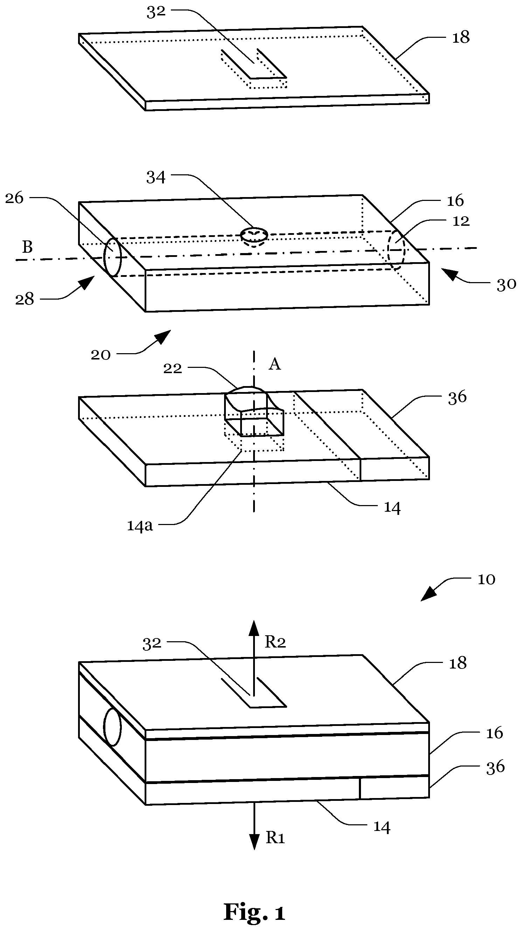

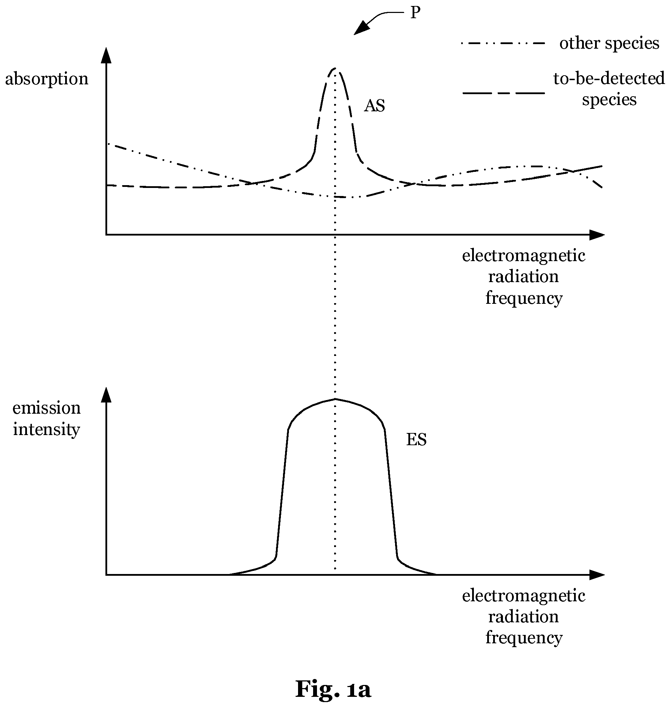

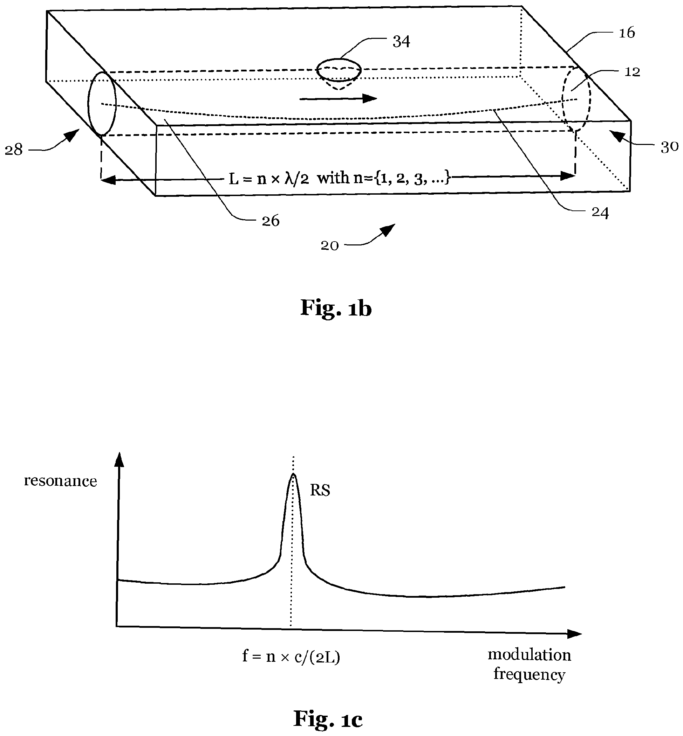

Fig. 1 schematically illustrates components of a photoacoustic detector 10. The photoacoustic detector 10 is configured to detect the presence (or absence) of one or more species in a fluid 12. The photoacoustic detector 10 may also be configured to detect the concentration of one or more species in a (liquid or gaseous) fluid 12. For instance, the photoacoustic detector 10 may be configured to detect the CO₂ concentration in air or the NO₂ concentration in industrial exhaust gases, car exhaust gases, air, etc. Notably, the design of the photoacoustic detector 10 does not limit itself as regards a specific to-be-detected species but may be used for detecting a variety of different (liquid or gaseous) species.

As illustrated in Fig. 1, the photoacoustic detector 10 comprises an emitter 14, an acoustic resonator 16, and an acoustic sensor 18. The emitter 14 is arranged adjacent to a transparent wall 20 of the acoustic resonator 16. During operation, the emitter 14 emits modulated electromagnetic radiation 22 which enters the acoustic resonator 16 through the transparent wall 20. The emitter 14 may be designed as a single LED or LD with one active region 14a. The emitter 14 may also comprise a row of active regions 14a (wherein the active regions 14a are displaced from each other along the direction of propagation of the acoustic wave 24), wherein the electromagnetic radiation 22 emitted by the active regions 14a may be independently modulated, e.g., with a phase shift between the modulation cycles, to increase the sensitivity of the detector 10. Notably, other radiation sources than those mentioned in this paragraph may also be contemplated.

As illustrated in Fig. 1a, the spectrum of the modulated electromagnetic radiation 22 emitted by the emitter 14 (labelled as "ES" in Fig. 1a) may be matched to the one or more species that are to be detected. That is, the spectrum of the modulated electromagnetic radiation 22 may be chosen such that the absorption spectrum of the to-be-detected species (labelled as "AS" in Fig. 1a) has a peak P within the spectrum of the modulated electromagnetic radiation 22, while the other species within the fluid 12 do not have a peak P within the spectrum of the modulated electromagnetic radiation 22.

Moreover, the spectrum of the modulated electromagnetic radiation 22 may be chosen such that the modulated electromagnetic radiation 22 is absorbed by the to-be-detected species, whereas other species within the fluid 12 do not significantly, or to a far lesser extent absorb the modulated electromagnetic radiation 22. Notably, this is not a prerequisite because if frequency modulation is applied, it may be allowed that the modulated electromagnetic radiation 22 is absorbed to a larger extent by the other species within the fluid 12 than by the to-be-detected species.

The absorption of the modulated electromagnetic radiation 22 causes the to-be-detected species to heat-up (and cool-down), resulting in successive cycles of expansion and contraction of the fluid 12 within the irradiated volume. The cycles cause an acoustic wave 24 traveling through the cavity 26 of the resonator 16. In this regard, Fig. 1b and Fig. 1c illustrate an example of a pressure distribution within the cavity 24 (at a given instance) resulting from a modulation frequency that matches a resonance frequency f = n × c/(2L) of the resonator 16 (with c being the propagation speed of sound within the fluid 12). The modulation frequency may be above 1 kHz and the wavelength of the acoustic wave 24 may depend on the length of the cylindrical cavity 26 (along axis B).

Thus, when a fluid 12 containing the to-be-detected species is supplied via the inlet 28, flown through the cavity 26 and exhausted via the outlet 30, the concentration of the to-be-detected species within the fluid 12 may be determined by measuring the amplitude of the acoustic wave 24 resulting from the cycles of expansion and compression caused by the modulation that successively increases and decreases the absorption of the to-be-detected species with a frequency of electromagnetic radiation 22 that matches the absorption peak P. This is because a higher concentration of the to-be-detected species increases the degree at which the fluid 12 in the irradiated volume is heated-up and hence, leads to higher amplitudes of the acoustic wave 24.

As shown in Fig. 1 and Fig. 1b, the amplitude of the acoustic wave 24 may be measured by placing a cantilever 32 over an opening 34 of the resonator cavity 26. The resonance frequency of the cantilever 32 may be matched to the resonance frequency *f* of the resonator 16 to increase the detection sensitivity. The cantilever 32 may be designed as a piezoelectric cantilever beam that allows converting the amplitude of the acoustic wave 24 to an electrical signal that can be further processed/analyzed by an electronic circuit 36. The electronic circuit 36 may be configured to cancel the background noise.

For example, the detector 10 may be calibrated based on a fluid 12 that only contains species that do not (or only to a neglectable degree) absorb the modulated electromagnetic radiation 22 and by compensating the signal generated by the cantilever 32. Moreover, a MOCAM (cf. WO 2007/056772 A2) or an E-MOCAM (cf. Zheng, Huadan & Dong, L & Yin, Xukun & Liu, Xiaoli & Wu, Hongpeng & Zhang, Lei & Ma, Weiguang & Yin, Wangbao & Jia, Suotang. (2015). Ppb-level QEPAS NO2 sensor by use of electrical modulation cancellation method with a high power blue LED. Sensors and Actuators B: Chemical. 208. 10.1016/j.snb.2014.11.015.) may be used.

The background signal may be caused (in part) by modulated electromagnetic radiation 22 absorbed by components of the detector 10. For example, as the modulated electromagnetic radiation 22 propagates in a direction A that intersects with a direction of propagation B of the acoustic wave 24 caused by the modulated electromagnetic radiation 22, the modulated electromagnetic radiation 22 may be absorbed (to some degree) by the transparent wall 20 of the resonator 16 and/or the (cantilever 32 of the) acoustic sensor 18.

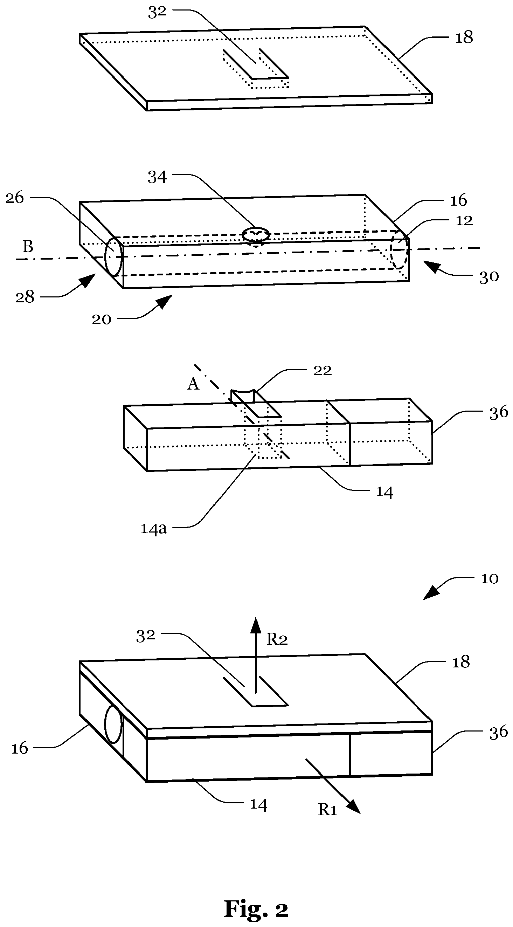

To reduce the amount of modulated electromagnetic radiation 22 that is absorbed by the (cantilever 32 of the) acoustic sensor 18, the direction of propagation of the electromagnetic radiation 22 may be rotated by 90° as illustrated in Fig. 2, such that the modulated electromagnetic radiation 22 incident on the (cantilever 32 of the) acoustic sensor 18 is substantially reduced. Notably, rotation angles that differ from 90° (e.g., rotation angles in a range of 15° to 165°) may also be contemplated.

As can be seen from Fig. 1 and Fig. 2, the acoustic sensor 18 may be designed as a chip (with an etched-out cantilever beam) which is attached to (e.g., bonded to) the acoustic resonator 16. The acoustic resonator 18 may also be designed as a chip which is attached to (e.g., bonded to) the emitter 14. In this regard, Fig. 1 shows a configuration in which the emitter 14, the acoustic resonator 16, and the acoustic sensor 18 are stacked, wherein the acoustic resonator 16 and the emitter 14 are stacked in a first radial direction R1 and the acoustic resonator 16 and the acoustic sensor 18 are stacked in a second radial direction R2 with R1 and R2 being anti-parallel. In Fig. 2, the emitter 14 and the acoustic resonator 16 are arranged side-by-side (possibly on a common substrate) while the acoustic sensor 18 is placed on top of the acoustic resonator 16. I.e., the first radial direction R1 and the second radial direction R2 form an angle of 90°, instead of 180° as shown in Fig. 1 (although the invention is not limited to the shown arrangements, as the shown angles may be varied within, for example, +/- 5, +/- 15, +/-30, +/-450). In any case, the components 14, 16, 18 of the detector 10 may form a "package" which may only require an equivalent area of (20 mm)² suitable for TO-3 packaging, or (10 mm)² or less.

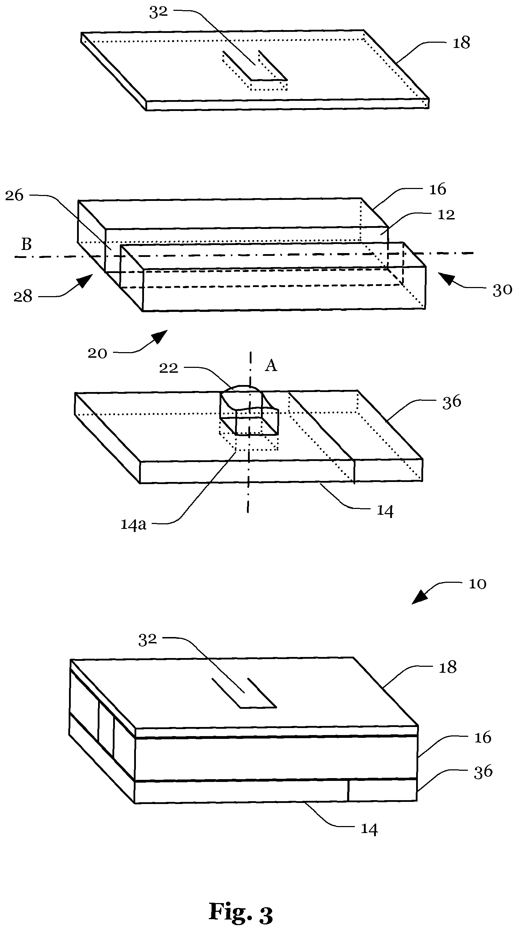

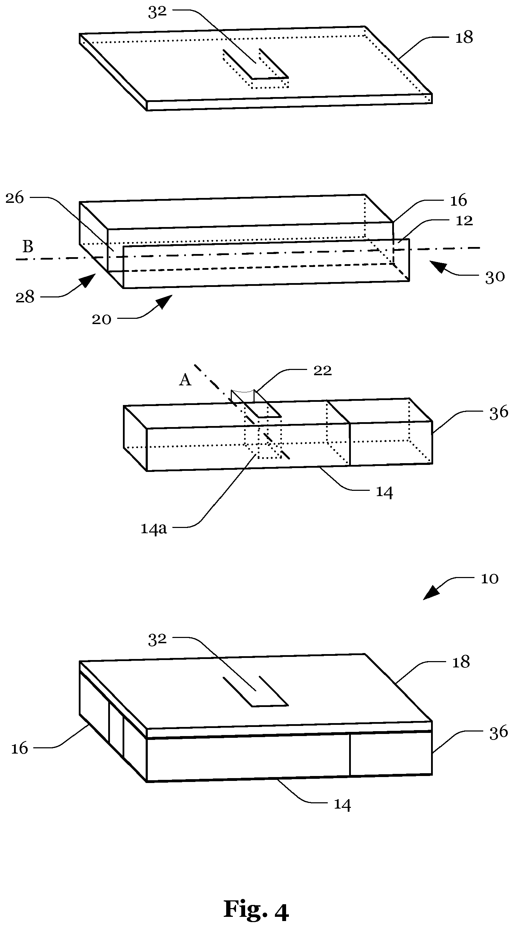

As shown in Fig. 3 and Fig. 4, the resonator cavity 26 may be rectangular instead of cylindrical. This may facilitate manufacturing the detector 10, as instead of etching a cylindrical cavity 26 into a (glass) substrate (such as BK7), a trench may be etched into the substrate and the trench may be covered by the acoustic resonator 18. Notably, cavities 26 with other cross-sectional shapes may be used as well.

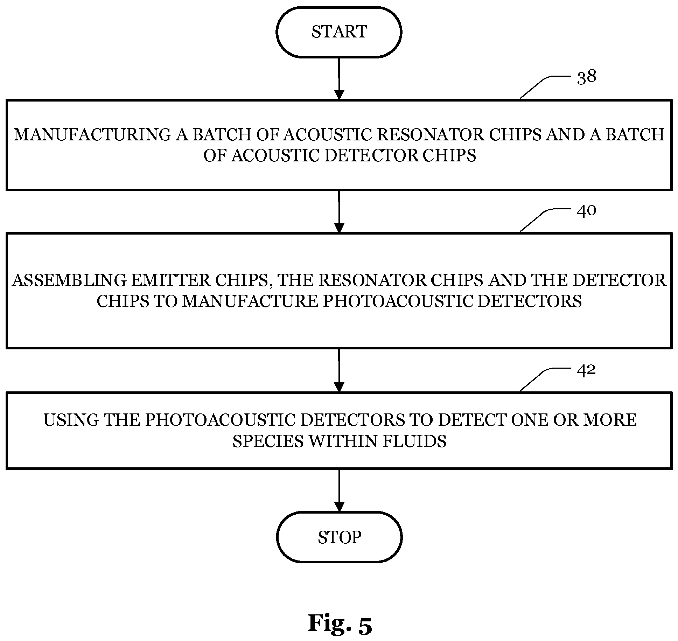

Fig. 5 shows a flow chart of a process of manufacturing a batch of detectors 10. The process starts at step 38 by manufacturing acoustic resonators 16 and acoustic sensors 18 based on batch processing. For instance, a plurality of acoustic resonators 16 may be manufactured from a common substrate, and a plurality of acoustic sensors 18 may be manufactured from a common substrate. After cutting the substrates, a plurality of detectors 10 may be manufactured by assembling the components 14, 16, 18 in step 40. At step 42, the detectors 10 may be used to detect one or more species in fluids 12, as described above.

Notably, instead of manufacturing the components 14, 16, 18 independently of each other and assembling the components 14, 16, 18, detectors 10 may also be manufactured by adding functional layers to a common substrate, processing those layers, and cutting the detectors 10.

### LIST OF REFERENCE NUMERALS

- 10: photoacoustic detector
- 12: fluid
- 14: emitter
- 14a: active region/material
- 16: acoustic resonator
- 18: acoustic sensor
- 20: transparent wall
- 22: electromagnetic radiation
- 24: acoustic wave (pressure wave)
- 26: cavity
- 28: inlet
- 30: outlet
- 32: cantilever
- 34: opening
- 36: electronic circuit
- 38: process step
- 40: process step
- 42: process step
- A: axis/direction of propagation of the electromagnetic radiation
- AS: absorption spectrum
- B: axis/direction of the propagation of the acoustic wave
- ES: emission spectrum
- L: dimension of the cavity
- P: absorption peak
- R1: radial direction
- R2: radial direction
- RS: resonance spectrum

## Claims

1. A photoacoustic detector (10), comprising:
an emitter (14);
an acoustic resonator (16); and
an acoustic sensor (18);
wherein
the emitter (14) is arranged adjacent to a transparent wall (20) of the acoustic resonator (16) and is configured to emit modulated electromagnetic radiation (22) that enters the acoustic resonator (16) through the transparent wall (20) in a direction (A) that intersects with a direction (B) of propagation of an acoustic wave (24) caused by the modulated electromagnetic radiation (22).

2. The photoacoustic detector (10) of claim 1, wherein a modulation frequency of the modulated electromagnetic radiation (22) is at 1 kHz or above.

3. The photoacoustic detector (10) of claim 1 or 2, wherein a distance between the emitter (14) and the transparent wall (20) is below λ/2 with λ being a zeroth-order resonance wavelength of the acoustic resonator (16).

4. The photoacoustic detector (10) of any one of claims 1 to 3, wherein the emitter (14) is in contact with the transparent wall (20) of the acoustic resonator (16).

5. The photoacoustic detector (10) of claim 4, wherein the emitter (14) comprises a semiconductor chip with a surface that adheres to a surface of the transparent wall (20).

6. The photoacoustic detector (10) of any one of claims 1 to 5, wherein the acoustic sensor (18) is attached to the acoustic resonator (16).

7. The photoacoustic detector (10) of claim 6, wherein the acoustic sensor (18) comprises a cantilever (32) or a membrane that is in contact with a fluid (12) in the acoustic resonator (16).

8. The photoacoustic detector (10) of any one of claims 1 to 7, wherein the cantilever (32) or the membrane comprises silicon.

9. The photoacoustic detector (10) of any one of claims 1 to 8, wherein:
the direction (B) of propagation of the acoustic wave (24) is parallel to an axis of a cavity (26) of the acoustic resonator (16);
the acoustic resonator (16) and the emitter (14) are stacked in a first radial direction (Ri); and
the acoustic resonator (16) and the acoustic sensor (18) are stacked in a second radial direction (R2).

10. The photoacoustic detector (10) of claim 9, wherein the first radial direction (R1) and the second radial direction (R2) are anti-parallel or form an angle of 90°.

11. The photoacoustic detector (10) of any one of claims 1 to 10, wherein the emitter (14) is an edge emitter (14).

12. The photoacoustic detector (10) of any one of claims 1 to 11, wherein the emitter (14) is a light emitting diode, LED, or a laser diode, LD.

13. The photoacoustic detector (10) of any one of claims 1 to 12, further comprising an electronic circuit (36), the electronic circuit (36) being configured to filter out or compensate a background signal caused by modulated electromagnetic radiation (22) incident on the acoustic sensor (18).

14. The photoacoustic detector (10) of any one of claims 1 to 13, wherein the acoustic resonator (16) comprises a glass.

15. The photoacoustic detector (10) of any one of claims 1 to 14, wherein the direction (B) of propagation of the acoustic wave (24) and the direction (A) that intersects with the direction (B) of propagation of the acoustic wave (24) form an angle in a range of 150 to 165°.
